# EUROPEAN PATENT SPECIFICATION

(11) **EP 0 416 643 B1**
(45) Date of publication and mention of the grant of the patent: **04.01.1995**
(21) Application number: 90117279.1
(22) Date of filing: 07.09.1990
(51) Int. Cl.: G05B 19/418

(54) **Industrial robot device**
Industrierobotervorrichtung
Equipement robotique industriel

(30) Priority: 08.09.1989 JP 233735/89
(43) Date of publication of application: 13.03.1991
(73) Proprietor: MITSUBISHI DENKI KABUSHIKI KAISHA, Tokyo (JP)
(72) Inventor: Kato, Hisao, c/o Mitsubishi Denki K.K., Inazawa-shi, Aichi (JP)
(74) Representative: Lehn, Werner, Dipl.-Ing.

(56) References cited:
- US-A- 4 088 237
- US-A- 4 773 523
- US-A- 4 799 581
- US-A- 4 835 730
- MICROPROCESSORS AND MICROSYSTEMS. vol. 13, no. 3, April 1989, LONDON GB pages 195-202; W.v.d. Broek, H. de Boer:" Adaptation of a robotics algorithm for a distributed implementation using transputers."
- Advances in instrumentation and Control vol. 44, no. 3, 1989, Triangle Park,NC, US pages 1133 - 1147; Karen E. Clark et al.: "Cell control beyond themachine shop world."

## Description

### BACRGROUND OF THE INVENTION

### (Field of the Invention)

This invention relates to an industrial robot system for loading a pallet with a predetermined number of work materials of a predetermined number of different kinds.

### (Prior Art)

A loading system has been disclosed for instance by Japanese Patent Application (OPI) No. 33426/1986 (the term "OPI" as used herein means an "unexamined published application") in which a loading pattern is formed according to the dimensions of goods given, and the goods are received and placed on the pallet in an optional order according to the loading plan.

However, the above-described conventional industrial robot system suffers from the following difficulties: In placing work materials of different kinds on a pallet with the kinds of work materials to be placed on the pallet specified and with the number of work materials of each of the kinds thus specified determined, the system is unavoidably intricate in construction and accordingly expensive. Furthermore, it is difficult for the system to handle the work materials at high speed, and the system needs a large space for handling a large number of work materials.

From US 4 835 730 an automated printed circuit board assembly systemis known, including a robot having a movable arm with a tool used for gripping parts. The robot takes circuit components from specified feeders and inserts them in specified sockets in a printed circuit board.

From US-A-4 088 237 a system for storing and selecting goods in a warehouse is known. Conveyor means are used for storing goods and a human operator selects the goods, takes them off the conveyor and places them on a pallet or delivery cart.

From microprocessors and microsystems, volume 13, number 3, April 1989, London GB, pages 195 - 202, Broek et al, "Adaptation of a robotic algorithm for a distributed implementation using transputers" a robot cell is known which includes a conveyor for supplying parcels of different sizes at random. The robot takes the parcels off the conveyor and places them in a container choosing the best of all feasible placements.

### SUMMARY OF THE INVENTION

The object of the invention is to provide an industrial robot system which is low in manufacturing cost and can handle large numbers of work materials of different kinds according to a loading plan with ease.

The foregoing object of the invention has been achieved by an industrial robot system for loading a pallet with a predetermined number of work materials of a pre-determined number of different kinds; comprising
- a plurality of separate work stands on which work materials are placed, whereby different work materials are placed on different work stands;
- a travelling robot which is moved on a travelling path along said plurality of work stands for carrying said work materials from said work stands to said pallet ;
- loading instruction means for specifying kinds of work materials to be carried over to said pallet and the number of said work materials of each of said specified kinds; and
- control means for causing said travelling robot to place the work materials on said pallet according to an instruction of said loading instructions means.

In the industrial robot system thus organized, in response to a loading instruction the travelling robot is moved to the work stand on which the work materials of the kind thus specified are placed, to remove the work materials from the work stand onto the pallet.

### BRIEF DESCRIPTION OF THE DRAWINGS

Fig. 1 is an explanatory diagram outlining the arrangement of a first example of an industrial robot system according to this invention;
Fig. 2 is a block diagram showing an electrical circuit in the industrial robot system shown in Fig. 1;
Fig. 3 is a flow chart for a description of the operation of the industrial robot system shown in Fig. 1;
Fig. 4 is an explanatory diagram outlining the arrangement of a second example of the industrial robot system according to the invention.

### SUMMARY OF THE INVENTION

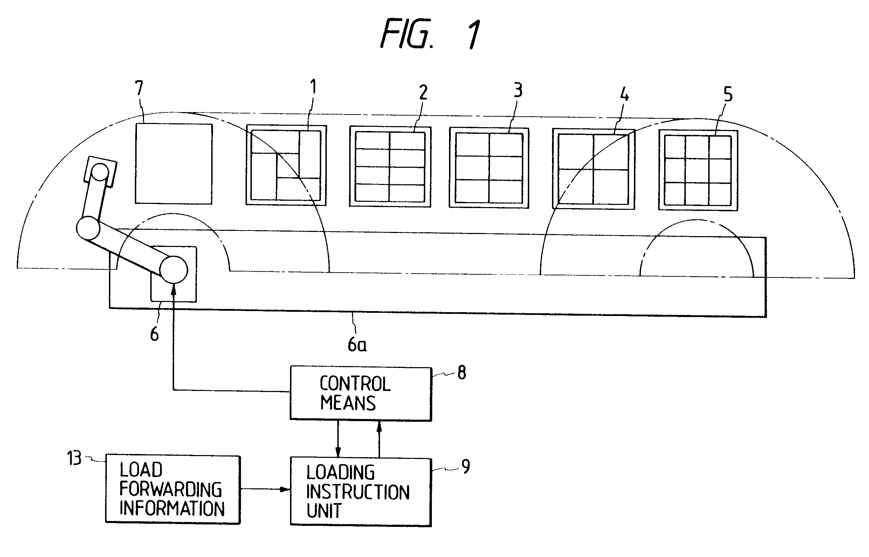

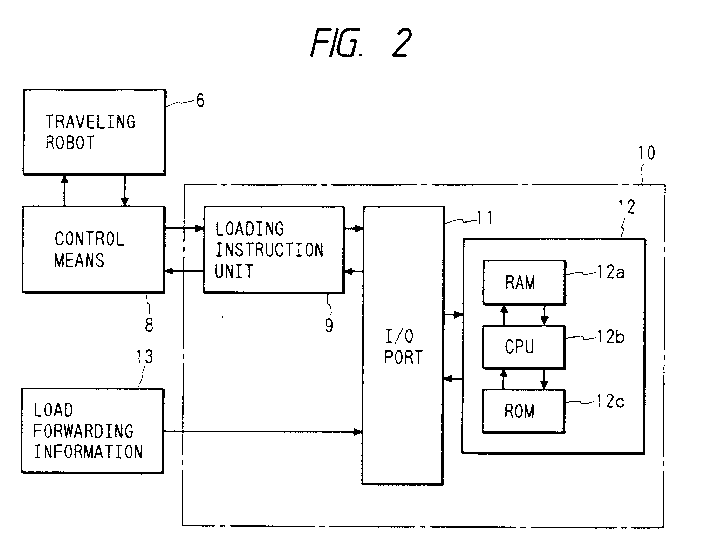

Figs. 1 through 3 shows an industrial robot system according to one embodiment of this invention. In these figures, reference numerals 1 through 5 designate first, second, third, fourth and fifth work stands arranged side by side on which work materials of different kinds are placed separately according to the kinds (different work materials being placed on different work stands); 6, a traveling robot provided with a traveling path 6a along the work stands 1 through 5; 7, a pallet located adjacent to the first work stand 1 and in the operation range of the traveling robot 6; 8, control means with a program for operating the traveling robot 6; 9, a loading instruction unit for specifying the numbers of work materials of different kinds to be placed on pallets, a work material loading procedure, and so forth to cause the traveling robot 6 to handle the work materials ; and 10, a control device comprising the loading instruction unit 9, an I/O port 11, and a computer 12 including a RAM 12a, a CPU 12b, and a ROM 12c; and 13, load forwarding information.

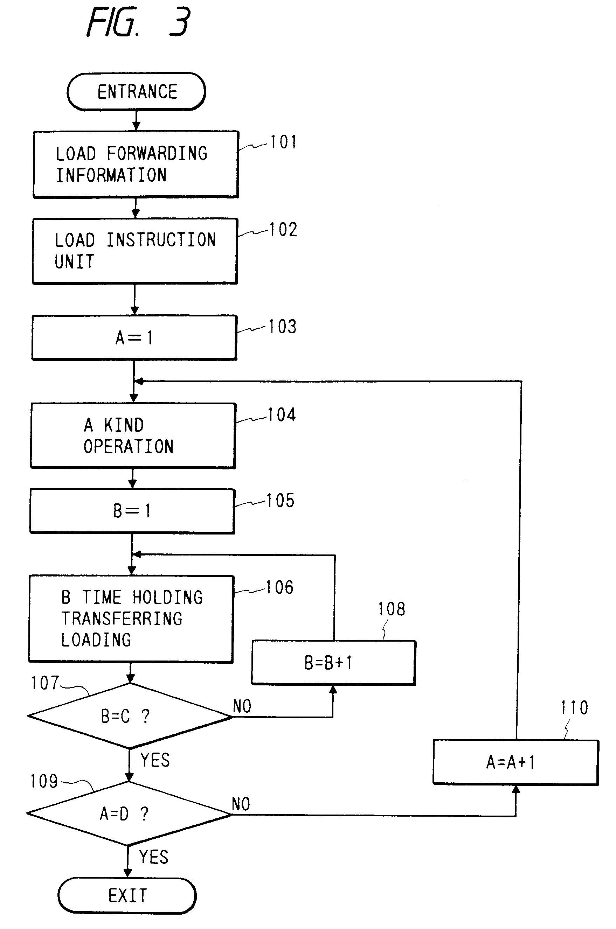

The industrial robot system thus organized operates as shown in a flow chart of Fig. 3. When, in Step 101, load forwarding information 13 is inputted with an empty pallet 7 set in place, Step 102 is effected in which the load instruction unit 9 provides a loading instruction. As a result, Step 103 is effected, and then in Step 104 an operation of handling work materials of a first kind is carried out. That is, the traveling robot 6 is stopped, for instance, at the first work stand 1, and then Step 106 is effected after Step 105, to carry out a first removing, carrying and placing operation; more specifically, the traveling robot 6 removes the work materials from the first work stand, and carries them from the first work stand 1 over to the pallet 7 and places them on the latter 7. Thereafter, in Step 107, it is determined whether or not the operation of Step 106 has been carried out a predetermined number of times. If not, Step 108 is effected, so that Step 106 is effected again. If yes; that is, if the operation of Step 106 has been carried out the predetermined number of times, Step 109 is effected to determine whether or not the number of kinds of the work materials which have been handled has reached a predetermined value. If not, Step 104 is effected after Step 110, so that an operation of handling work materials of a second kind is carried out. That is, the traveling robot 6 is moved to another work stand, and handles the work materials there similarly as in the above-described operation of handling the work materials of the first kind; more specifically, the traveling robot 6 handles the work materials on the work stand in Step 106. When in Step 109 it is determined that the number of kinds of the work materials which have been handled in Step 104 has reached the predetermined value, then the pallet loading operation is ended. Thereafter, another empty pallet is supplied, and another pallet loading operation is carried out according to another piece of load forwarding information 13. As is apparent from the above description, the industrial robot system of the invention is simple in arrangement, and can be installed in a small area, and is capable of handling larger numbers of work materials of different kinds according to loading instructions with ease.

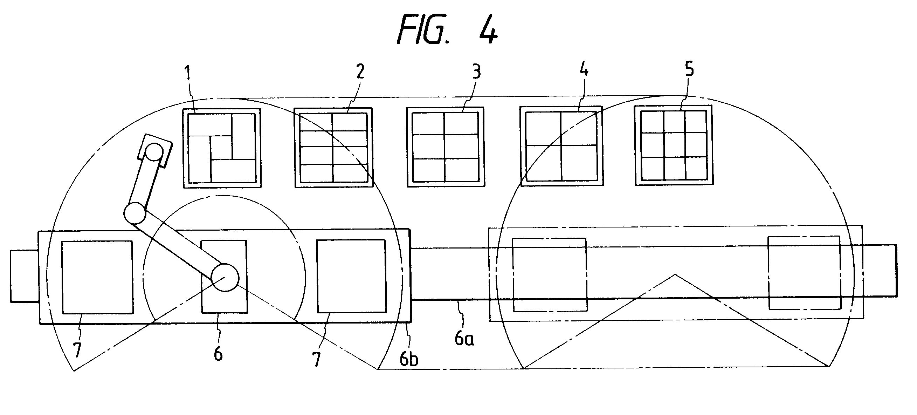

Fig. 4 shows a second embodiment of the invention, in which those components which have been previously described with reference to Figs. 1 through 3 are therefore designated by the same reference numerals or characters. In Fig. 4, reference character 6b designates a pallet stand provided for the traveling robot 6 in such a manner that it is extended on both sides of the robot body; 7, two pallets on the pallet stand 6b.

In the second embodiment shown in Fig. 4, similarly as in the first embodiment shown in Figs. 1 through 3, the traveling robot 6, the control device 10, etc. are provided. Therefore, the second embodiment operates similarly as in the case of the first embodiment shown in Figs. 1 through 3.

In the second embodiment shown in Fig. 4, the pallets 7 are moved together with the traveling robot 6, which reduces the distance required for the traveling robot 6 to move for loading the pallet with work materials; that is, the work materials can be placed on the pallets with higher efficiency.

As was described above, the industrial robot system according to the invention comprises: the traveling robot which moves along a plurality of work stands; and the loading instruction unit for specifying the kinds of work materials to be placed on the pallet, the number of work materials of each kind, and a pallet loading procedure, to operate the traveling robot. Thus, the industrial robot system according to the invention is simple in arrangement, and can be installed in a small area, and can handle large numbers of work materials of different kinds according to a loading instruction with ease.

## Claims

1. An industrial robot system adapted for loading a pallet (7) with a predetermined number (B) of work materials of a predetermined number (A) of different kinds; comprising
- a plurality of separate work stands (1 - 5) on which work materials are placed, whereby different work materials are placed on different work stands;
- a travelling robot (6) which is moved on a travelling path (6a) along said plurality of work stands (1 - 5) for carrying said work materials from said work stands to said pallet (7);
- loading instruction means (9, 13) for specifying kinds of work materials to be carried over to said pallet (7) and the number of said work materials of each of said specified kinds; and
- control means (8) for causing said travelling robot (6) to place the work materials on said pallet (7) according to an instruction of said loading instructions means (9, 13).

2. Robot system according to claim 1,
wherein
the pallet (7) is moved together with the travelling robot (6).

3. A system according to claim 2,
wherein a pair of pallets is located on both sides of said travelling robot.

4. A system according to claim 1,
wherein said pallet (7) is located adjacent to said work stands (1 - 5).

## Patentansprüche

1. Industrielles Robotersystem, welches angepaßt ist zum Beladen einer Palette (7) mit einer vorbestimmten Anzahl (B) von Arbeitsmaterialien einer vorbestimmten Anzahl (A) verschiedener Arten; mit
- einer Vielzahl von separaten Arbeitsständen (1 bis 5), auf welchen Arbeitsmaterialien plaziert sind, wodurch verschiedene Arbeitsmaterialien auf verschiedenen Arbeitsständen plaziert sind;
- einem Laufroboter (6), welcher auf einem Laufpfad (6a) entlang der Vielzahl von Arbeitsständen (1 bis 5) bewegt wird, um die Arbeitsmaterialien von den Arbeitsständen zu der Palette (7) zu tragen;
- Beladungsanweisungseinrichtungen (9, 13) zum Spezifizieren von Arten von Arbeitsmaterialien, die zu der Palette (7) zu tragen sind, und der Anzahl der Arbeitsmaterialien jeder der spezifizierten Arten; und
- Steuerungseinrichtungen (8) zum Bewirken, daß der Laufroboter (6) die Arbeitsmaterialien auf der Palette (7) gemäß einer Anweisung der Beladungsanweisungseinrichtungen (9, 13) plaziert.

2. Robotersystem nach Anspruch 1, dadurch gekennzeichnet, daß die Palette (7) zusammen mit dem Laufroboter (6) bewegt wird.

3. System nach Anspruch 2, dadurch gekennzeichnet, daß ein Paar von Paletten auf beiden Seiten des Laufroboters angeordnet ist.

4. System nach Anspruch 1, dadurch gekennzeichnet, daß die Palette (7) neben den Arbeitsständen (1 bis 5) angeordnet ist.

## Revendications

1. Système robotique industriel prévu pour charger une palette (7) d'un nombre prédéterminé (B) de produits d'un nombre prédéterminé (A) de types différents; comprenant
- plusieurs postes de travail séparés (1-5) auxquels sont placés des produits, des produits différents étant placés aux différents postes de travail
- un robot mobile (6) qui se déplace sur un trajet (6a) le long de ladite pluralité de postes de travail (1-5) pour transporter lesdits produits des postes de travail à la palette (7);
- un moyen à instructions de chargement (9, 13) pour spécifier des types de produits à transporter sur la palette (7) et le nombre de produits de chacun des types spécifiés; et
- des moyens de commande (8) pour amener ledit robot mobile (6) à placer les produits sur ladite palette (7) selon une instruction dudit moyen (9, 13) à instructions de chargement.

2. Système robotique selon la revendication 1, dans lequel
la palette (7) est déplacée avec le robot mobile (6).

3. Système selon la revendication 2,
dans lequel une paire de palettes est disposée de part et d'autre dudit robot mobile.

4. Système selon la revendication 1,
dans lequel ladite palette (7) est disposée près desdits postes de travail (1-5).
